# EUROPÄISCHE PATENTSCHRIFT

(11) **EP 1 941 169 B1**
(45) Veröffentlichungstag und Bekanntmachung des Hinweises auf die Patenterteilung: **15.04.2009**
(21) Anmeldenummer: 06792307.8
(22) Anmeldetag: 28.09.2006
(51) Int. Cl.: F16B 37/02, F16B 37/04

(54) **VORRICHTUNG ZUM VERBINDEN MIT EINER SCHRAUBE**
DEVICE TO BE CONNECTED TO A SCREW
DISPOSITIF DE CONNEXION AU MOYEN D'UNE VIS

(30) Priorität: 21.10.2005 DE 102005050513
(43) Veröffentlichungstag der Anmeldung: 09.07.2008
(73) Patentinhaber: A. RAYMOND ET CIE, 38000 Grenoble (FR)
(72) Erfinder: MOTSCH, Uwe, 79618 Rheinfelden (DE); HULLMANN, Klaus, 79540 Lörrach (DE); DORST, Harald, 79576 Weil am Rhein (DE)
(74) Vertreter: Rüttgers, Joachim
(86) Internationale Anmeldenummer: PCT/EP2006/009424
(87) Internationale Veröffentlichungsnummer: WO 2007/045337

(56) Entgegenhaltungen:
- WO-A-98/20262
- DE-A1- 19 920 619
- US-A- 4 984 319

## Beschreibung

Die Erindung betrifft eine Vorrichtung zum Verbinden mit einer Schraube gemäß dem Oberbegriff des Patentanspruches 1.

Eine derartige Erindung ist aus WO98/20262 bekannt. Die vorbekannte Vorrichtung zur Verbindung mit einer Schraube verfügt über eine Anzahl von jeweils eine Öffnung aufweisenden Verbindungselementen, die mit einem Gewinde der Schraube in Eingriff bringbar sind. Die Verbindungselemente sind in einer Vormontageanordnung lose Teile, wobei bei den Verbindungselementen entlang des Randes der Öffnung ein Gangabschnitt einer Gewindestruktur ausgebildet ist. Weiterhin ist eine Verbindungsanordnung vorhanden, in der die Verbindungselemente einer Endmontageanordnung in einer vorbestimmten räumlichen Anordnung zueinander gehalten sind. Die Verbindungselemente sind als flache Platten ausgebildet und weisen Ausrichtstrukturen in Gestalt von Ausrichtkerben auf, die bei bestimmungsgemäßer Anordnung der Verbindungselemente in der Endmontageanordnung ineinander fluchten.

Aus US-A-4,984,319 ist eine Vorrichtung in Gestalt einer Käfigmutter bekannt, die eine Anzahl von als flache Platten ausgebildete Verbindungselemente aufweist, die über in Randausnehmungen der Verbindungselemente eingreifende Seitenwände eines Käfigteiles miteinander verbunden sind.

Aus DE 199 20 619 A1 ist eine Vorrichtung zur Verbindung mit einer Schraube in Gestalt einer übereinander gelegten Anordnung von als flache Platten ausgebildeten Verbindungselementen bekannt, die über überstehende Gangabschnitte einer Gewindestruktur sowie über Vorsprünge zum Beabstanden der Verbindungselemente verfügen.

Eine weitere Vorrichtung zum Verbinden mit einer Schraube ist aus der DE 33 27 055 A1 bekannt. Diese Vorrichtung ist als in einer Materialausnehmung anzuordnender Verankerungskörper ausgebildet und weist eine Anzahl von flachen, aus Blech gefertigten Verbindungselementen auf, die über Stege miteinander verbunden sind. Die Verbindungselemente weisen jeweils eine Ausnehmung auf, wobei die Ausnehmungen der Verbindungselemente bei bestimmungsgemäßer, in einem Abstand parallel zueinander ausgerichteter Anordnung der Verbindungselemente miteinander fluchten. Bei Eindrehen einer Schraube in der gattungsgemäßen Vorrichtung bewegen sich die Verbindungselemente zur Seite und kommen mit dem Material in Eingriff.

Der Erfindung liegt die Aufgabe zugrunde, eine Vorrichtung der eingangs genannten Art anzugeben, die sich durch eine hohe Stabilität der gestapelten Verbindungselemente vor Eingriff mit der Verbindungsanordnung auszeichnet.

Diese Aufgabe wird bei einer Vorrichtung der eingangs genannten Art erfindungsgemäß mit den kennzeichnenden Merkmalen des Patentanspruches 1 gelöst.

Durch die erfindungsgemäße Ausgestaltung ergibt sich durch den gegenseitigen Eingriff der Ausrichtelemente in Form von Vertiefungen und Ringen eine gegenseitige Fixierung der flachen Verbindungselemente beim Aufeinanderlegen und anschließenden Verbinden zum Ausbilden des Gewindeabschnittes.

Bei einer vorteilhaften Ausführung der erfindungsgemäßen Vorrichtung ist der Gangabschnitt vorzugsweise ein vollständig umlaufender Gewindegang ist. Bei einer Weiterbildung dieser Ausführung sind die Platten in der Endmontageanordnung aufeinanderliegend angeordnet, und bilden die Gangabschnitte der Platten ein durchgehendes Innengewinde aus.

Bei einem Ausführungstyp verbindet die Verbindungsstruktur die Verbindungselemente in einer Endmontageanordnung unlösbar miteinander. Beispielsweise weist bei diesem Ausführungsbeispiel die Verbindungsstruktur Schweißnähte oder Klebestellen auf.

Bei einem weiteren Ausführungstyp weist die Verbindungsstruktur ein Käfigteil auf, mit dem die Verbindungselemente in einer Endmontageanordnung lösbar miteinander verbunden sind. Bei diesem Ausführungstyp weisen in einer Weiterbildung die Verbindungselemente randseitig eingebrachte Randausnehmungen auf, und das Käfigteil verfügt über eine Bodenplatte sowie über an die Bodenplatte angesetzte Seitenwände, die in den Randausnehmungen angeordnet sind und mit ihren von der Bodenplatte wegweisenden Enden das von der Bodenplatte am weitesten beabstandete Verbindungselement übergreifen.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel mit mehreren Verbindungselementen, die über ein Käfigteil an einer Fixierklammer angebracht sind,
- Fig. 2: in einer perspektivischen Ansicht ein Verbindungselement des Ausführungsbeispieles gemäß Fig. 1,
- Fig. 3: einen Schnitt durch das Verbindungselement gemäß Fig. 2,
- Fig. 4: in einer perspektivischen Ansicht das Käfigteil gemäß Fig. 1 mit drei Verbindungselementen gemäß Fig. 1 und Fig. 2 in einer bestimmungsgemäßen Endmontageanordnung in dem Käfigteil,
- Fig. 5: in einer perspektivischen Ansicht eine Ausgestaltung eines Verbindungselementes gemäß der Erfindung für eine erfindungsgemäße Vorrichtung mit Blick auf eine in Einführrichtung einer Schraube vorderen Seite und
- Fig. 6: in einer perspektivischen Ansicht die Ausgestaltung gemäß Fig. 5 mit Blick auf eine in Einführrichtung einer Schraube hinteren Seite.

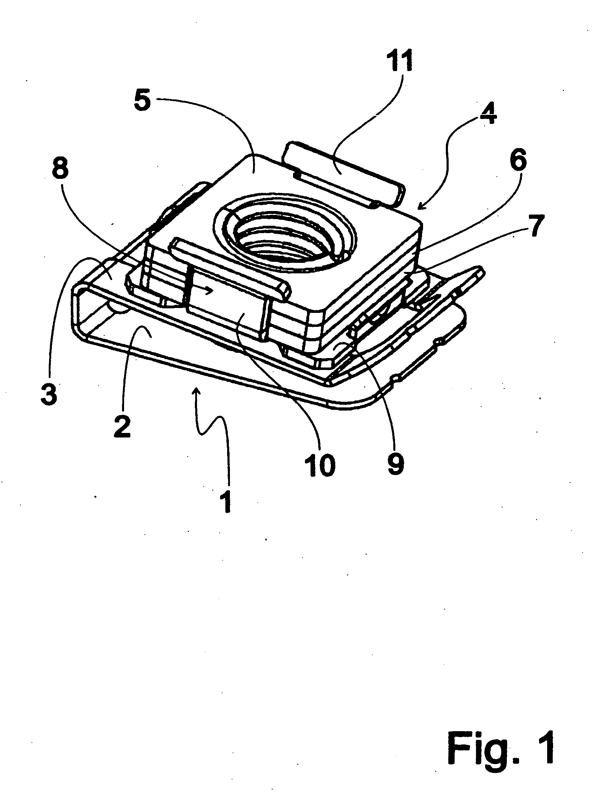

Fig. 1 zeigt in einer perspektivischen Ansicht eine an sich bekannte, zum Verbinden von zwei flachen Teilen vorgesehene Fixierklammer 1, die einen ersten Schenkel 1 und einen mit einer aufgebogenen Einführlasche ausgebildeten zweiten Schenkel 2 aufweist, die einander gegenüberliegen und über jeweils eine Ausnehmung verfügt, durch die zum Fixieren der Teile eine in Fig. 1 nicht dargestellten Schraube durchführbar ist. Die bei dem dargestellten Ausführungsbeispiel als Stapelgewindeblock 4 ausgeführte Vorrichtung gemäß Fig. 1 ist an dem zweiten Schenkel 3 angebracht.

Der Stapelgewindeblock 4 verfügt als Verbindungselemente über eine Anzahl von flachen, aus einem Blech gestanzten, in einer Vormontageanordnung losen Stapelplatten 5, 6, 7, die bei dem Ausführungsbeispiel gemäß Fig. 1 aufeinander liegend angeordnet sind. Die Stapelplatten 5, 6, 7 sind bei dem Ausführungsbeispiel gemäß Fig. 1 voneinander lösbar in einem ebenfalls aus einem Blech gestanzten Käfigteil 8 als Beispiel einer Verbindungsanordnung angeordnet. Das Käfigteil 8 ist mit einer Bodenplatte 9 ausgebildet, die an dem zweiten Schenkel 3 der Fixierklammer 1 angebracht ist. Das Käfigteil 8 verfügt weiterhin über eine erste Seitenwand 10 und eine zweite Seitenwand 11, die zum Fixieren der Stapelplatten 5, 6, 7 in der in Fig. 1 dargestellten Endmontageanordnung der Vorrichtung dienen.

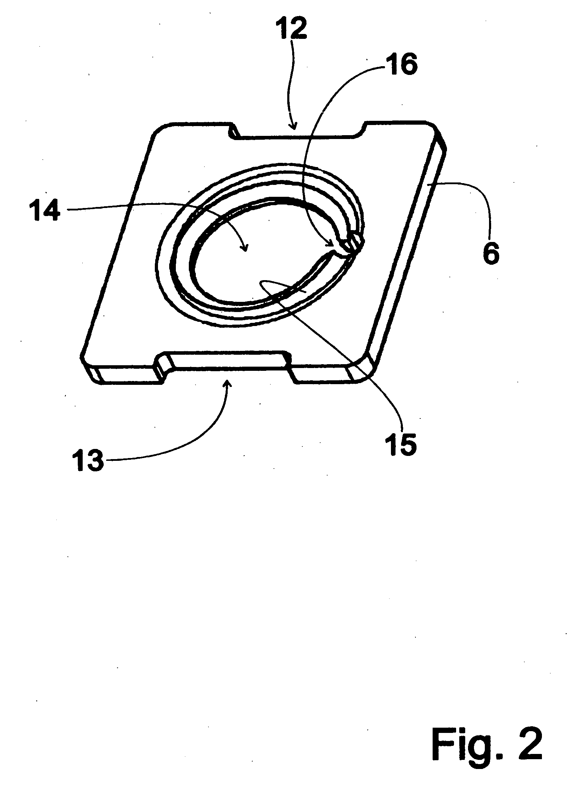

Fig. 2 zeigt in einer perspektivischen Ansicht die mittlere Stapelplatte 6 des Ausführungsbeispieles gemäß Fig. 1, wobei die weiteren äußeren Stapelplatten 5, 7 identisch zu der mittlere Stapelplatte 6 ausgebildet sind. Aus Fig. 2 ist deutlich ersichtlich, die Stapelplatte 6 im wesentlichen quadratisch ausgebildet ist und an zwei gegenüberliegenden Randseiten jeweils eine nach außen offene Randausnehmung 12, 13 aufweist. Weiterhin lässt sich Fig. 2 entnehmen, dass die Stapelplatte 6 über eine mittig angeordnete, kreisförmige Öffnung 14 verfügt, entlang deren Außenrand ein umlaufender Teilgewindegang 15 ausgebildet ist. Bei dem erläuterten Ausführungsbeispiel entspricht der Teilgewindegang 15 jeder Stapelplatte 5, 6, 7 einem vollständig umlaufenden Gewindegang eines Innengewindes. Schließlich ist in Fig. 2 dargestellt, dass die Stapelplatte 6 mit einer Ausrichtkerbe 16 einer Ausrichtstruktur ausgebildet ist, die sich von der Wand der Öffnung 14 in radialer Richtung nach außen erstreckt. Die Ausrichtkerbe 16 dient ebenfalls dazu, dass eine Schraubenflanke einer Schraube angesetzt und die Schraube eingedreht werden kann.

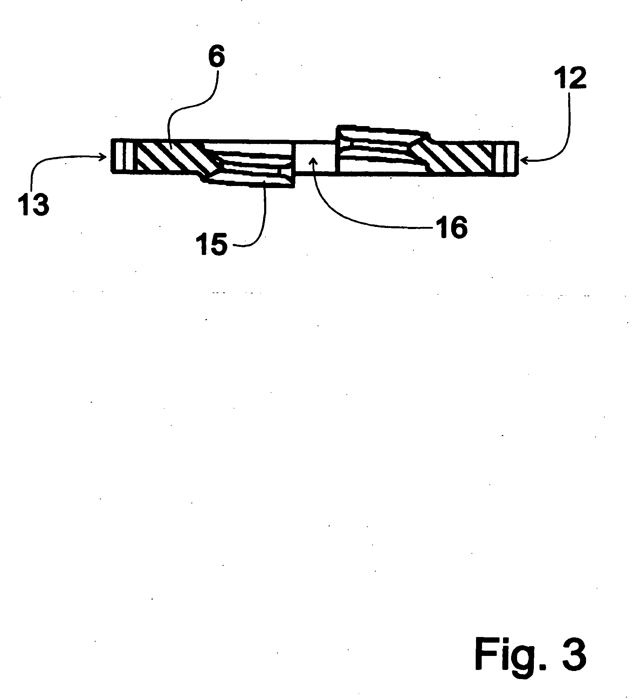

Fig. 3 zeigt einen Schnitt durch die Stapelplatte 6 gemäß Fig. 2. Aus Fig. 3 ist besonders deutlich ersichtlich, dass sich der durch Verprägen ausgebildete Teilgewindegang 15 abschnittsweise über die Flachseiten der Stapelplatte 6 erhebt, so dass bei Aufeinanderlegen der Stapelplatten 5, 6, 7 ein durchgehendes Innengewinde ausgebildet ist.

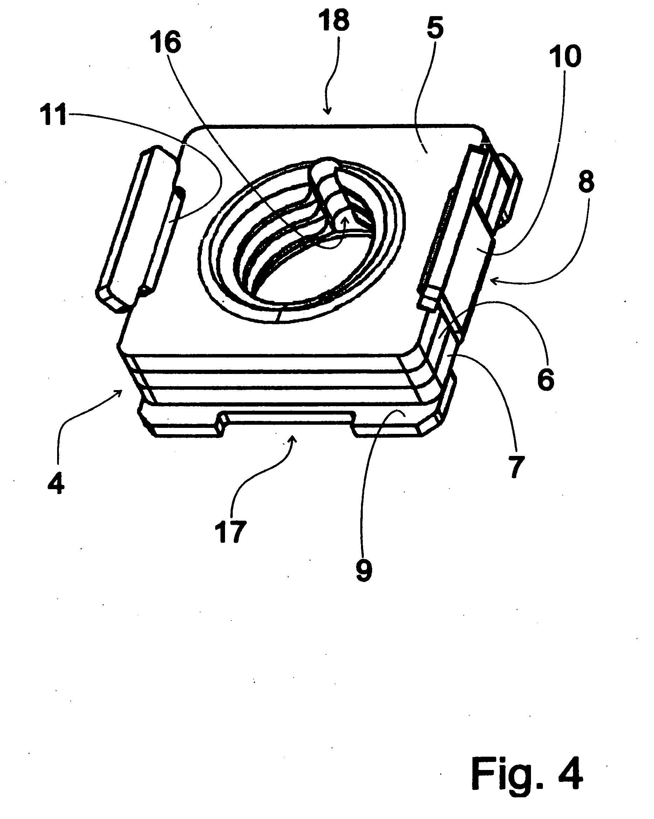

Fig. 4 zeigt das Käfigteil 8 gemäß Fig. 1 mit den in der bestimmungsgemäßen Endmontageanordnung in einer festen räumlichen Anordnung zueinander, nämlich bei dem dargestellten Ausführungsbeispiel flach aufeinander liegend, lösbar gehaltenen Stapelplatten 5, 6, 7. In Verbindung mit Fig. 2 lässt sich erkennen, dass die Seitenwände 10, 11 des Käfigteiles 8 in die Randausnehmung 12, 13 der Stapelplatten 5, 6, 7 eingreifen und damit die Stapelplatten 5, 6, 7 fixieren. Dabei übergreifen die freien Enden der Seitenwände 10, 11 mit zum leichten Einführen Stapelplatten 5, 6, 7 abgewinkelten, gegenüber der Breite der Randausnehmungen 12, 13 verbreiterten Endstücken die am weitesten von der Bodenplatte 9 beabstandete äußere Stapelplatte 5.

Aus Fig. 4 ist weiterhin ersichtlich, dass in der Bodenplatte 9 ebenfalls einander gegenüberliegende, nach außen offene Randausnehmungen 17, 18 ausgebildet sind, die zum Befestigen des Stapelgewindeblockes 4 durch Eingriff mit entsprechenden, beispielsweise an einer Fixierklammer 1 ausgebildeten Gegenstücken dienen.

Schließlich lässt sich Fig. 4 entnehmen, dass die Ausrichtkerben 16 der Endmontageanordnung miteinander fluchtend ausgerichtet sind, so dass hiermit eine einfache stichprobenartige Sichtkontrolle oder automatische mechanische Kontrolle einer korrekten Ausrichtung der Stapelplatten 5, 6, 7 durchführbar ist.

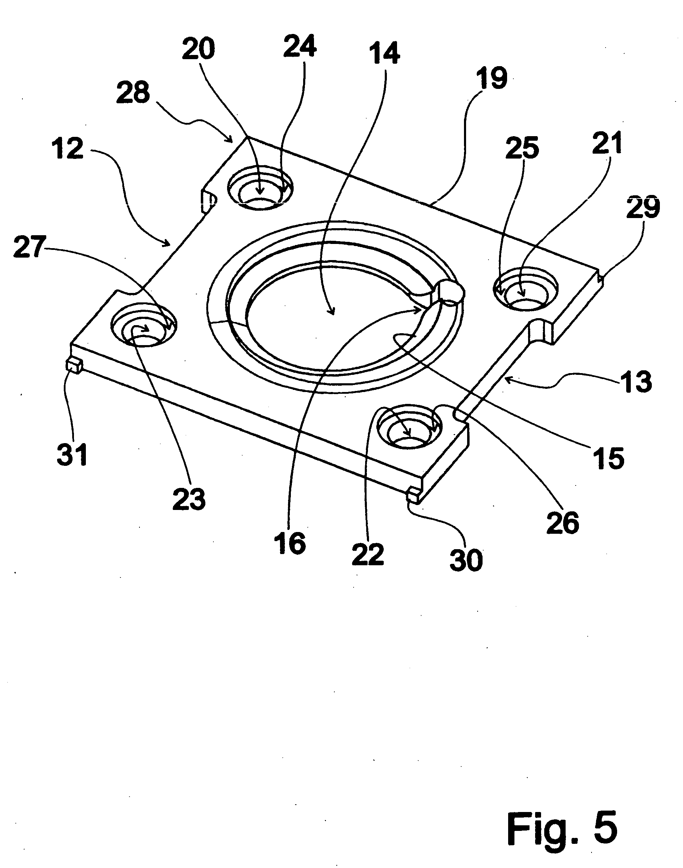

Fig. 5 zeigt in einer perspektivischen Ansicht eine Ausgestaltung eines Verbindungselementes für eine erfindungsgemäße Vorrichtung mit Blick auf eine in Einführrichtung einer Schraube vorderen Seite. Das Verbindungselement gemäß Fig. 5 ist ebenfalls als Stapelplatte 19 ausgeführt, wobei sich bei den in Zusammenhang mit Fig. 1 bis Fig. 4 erläuterten Stapelplatten 5, 6, 7 und der Stapelplatte 19 gemäß Fig. 5 entsprechende Merkmale mit den gleichen Bezugszeichen versehen und im weiteren nicht näher erläutert sind. Die in der flächigen Grundform rechteckige Stapelplatte 19 gemäß Fig. 5 verfügt über hier in den vier Eckbereichen eingebrachte, im wesentlichen zylinderförmige Ausnehmungen 20, 21, 22, 23, die auf der in der Darstellung gemäß Fig. 5 sichtbaren vorderen Seite jeweils mit einem gegenüber dem übrigen durch die Stapelplatte 19 durchtretenden Abschnitt zum Ausbilden einer Vertiefung 24, 25, 26, 27 als Beispiel von ersten Ausrichtelementen wenigstens abschnittsweise mit einem größeren Durchmesser ausgebildet ist. Bei dem dargestellten Ausgestaltung weist jede Vertiefung 24, 25, 26, 27 einen kreisförmigen Querschnitt auf und ist symmetrisch zu der Längsachse der zugehörigen zylinderförmigen Ausnehmung 20, 21, 22, 23 angeordnet.

Weiterhin ist Fig. 5 zu entnehmen, dass an den unterbrechungsfreien Randseiten zum Erleichtern der Handhabung Zapfen 28, 29, 30, 31 angeformt sind, die über die jeweilige Randseite vorstehen.

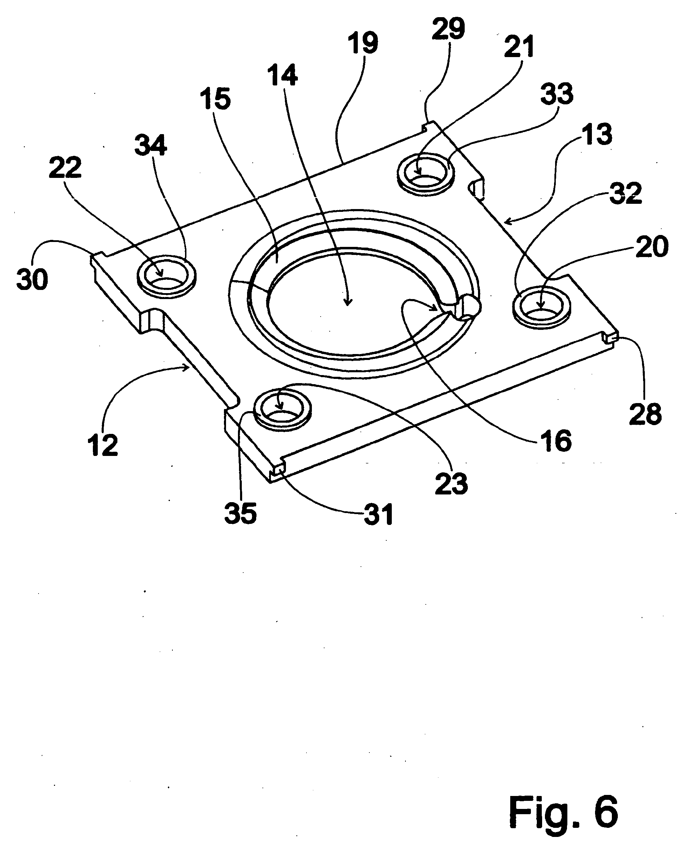

Fig. 6 zeigt in einer perspektivischen Ansicht die Stapelplatte 19 gemäß Fig. 5 mit Blick auf eine in Einführrichtung einer Schraube hinteren Seite. Aus Fig. 6 ist ersichtlich, dass auf der hinteren Seite an jede Ausnehmung 20, 21, 22, 23 als Beispiel von komplementär zu den ersten Ausrichtelementen ausgebildeten zweiten Ausrichtelementen jeweils ein Ring 32, 33, 34, 35 angeformt ist, die ebenfalls symmetrisch zu der Längsachse der Ausnehmungen 20, 21, 22, 23 angeordnet sind und in ihren Abmessungen den entsprechenden Dimensionen der Vertiefungen 24, 25, 26, 27 entsprechen.

Dadurch ergibt sich durch den gegenseitigen Eingriff der Ausrichtelemente bei dieser Ausgestaltung in Form von Vertiefungen 24, 25, 26, 27 und Ringen 32, 33, 34, 35 eine gegenseitige Fixierung der Stapelplatten 19 beim Aufeinanderlegen und anschließenden Verbinden zum Ausbilden des Gewindeabschnittes.

## Patentansprüche

1. Vorrichtung zum Verbinden mit einer Schraube, die über eine Anzahl von jeweils eine Öffnung (14) aufweisenden Verbindungselementen (5, 6, 7, 19) verfügt, die mit einem Gewinde der Schraube in Eingriff bringbar sind, wobei die Verbindungselemente (5, 6, 7, 19) in einer Vormontageanordnung lose Teile sind, wobei bei den Verbindungselementen (5, 6, 7, 19) entlang des Randes der Öffnung (14) ein Gangabschnitt (15) einer Gewindestruktur ausgebildet ist, wobei eine Verbindungsanordnung (8) vorhanden ist, in der die Verbindungselemente (5, 6, 7) in einer Endmontageanordnung in einer vorbestimmten räumlichen Anordnung zueinander gehalten sind und wobei die Verbindungselemente flache Platten (5, 6, 7, 19) sind sowie wenigstens eine Ausrichtstruktur (16) aufweisen, die bei bestimmungsgemäßer Anordnung der Verbindungselemente (5, 6, 7, 19) in der Endmontageanordnung miteinander fluchten, **dadurch gekennzeichnet, dass** jede Platte (19) an den Flachseiten ausgebildete und aufeinander angepasste erste und zweite Ausrichtelemente (24, 25, 26, 27; 32, 33, 34, 35) aufweist, wobei die ersten Ausrichtelemente an Ausnehmungen (20, 21, 22, 23) ausgebildeten Vertiefungen (24, 25, 26, 27) mit einem gegenüber den Ausnehmungen (20, 21, 22, 23) wenigstens abschnittsweise größeren Durchmesser sind und die zweiten Ausrichtelemente Ringe (32, 33, 34, 35) sind, die in ihren Abmessungen den entsprechenden Dimensionen der Vertiefungen (24, 25, 26, 27) entsprechen.

2. Vorrichtung nach Anspruch 1, **dadurch gekennzeichnet, dass** der Gangabschnitte (15) ein vollständig umlaufender Gewindegang ist.

3. Vorrichtung nach Anspruch 2, **dadurch gekennzeichnet, dass** die Platten in der Endmontageanordnung aufeinanderliegend angeordnet sind und dass die Gängabschnitte (15) der Platten (5, 6, 7) ein durchgehendes Innengewinde ausbilden.

4. Vorrichtung nach einem der Ansprüche 1 bis 3, **dadurch gekennzeichnet, dass** die Verbindungsstruktur die Verbindungselemente (5, 6, 7, 19) in einer Endmontageanordnung unlösbar miteinander verbindet.

5. Vorrichtung nach Anspruch 4, **dadurch gekennzeichnet, dass** die Verbindungsstruktur Schweißnähte aufweist.

6. Vorrichtung nach Anspruch 5, **dadurch gekennzeichnet**, das die Verbindungsstruktur Klebestellen aufweist.

7. Vorrichtung nach einem der Ansprüche 1 bis 3, **dadurch gekennzeichnet, dass** die Verbindungsstruktur ein Käfigteil (8) aufweist, mit dem die Verbindungselemente (5, 6, 7, 19) in einer Endmontageanordnung lösbar miteinander verbunden sind.

8. Vorrichtung nach Anspruch 7, **dadurch gekennzeichnet, dass** die Verbindungselemente (5, 6, 7, 19) randseitig eingebrachte Randausnehmungen (12, 13) aufweisen und dass das Käfigteil (8) über eine Bodenplatte (9) sowie über an die Bodenplatte (9) angesetzte Seitenwände (10, 11) verfügt, die in den Randausnehmungen (12, 13) angeordnet sind und mit ihren von der Bodenplatte (9) wegweisenden Enden das von der Bodenplatte (9) am weitesten beabstandete Verbindungselement (5) übergreifen.

## Claims

1. Device for connection to a screw, which has a number of connecting elements (5, 6, 7, 19) which each have an opening (14) and which can be made to engage a thread of the screw, the connecting elements (5, 6, 7, 19) being loose parts in a preassembly arrangement, a thread section (15) of a thread structure being formed in the case of the connecting elements (5, 6, 7, 19) along the edge of the opening (14), a connecting arrangement (8) being present in which the connecting elements (5, 6, 7) are held in a final assembly arrangement in a predetermined spatial arrangement relative to one another and the connecting elements being flat plates (5, 6, 7, 19) and having at least one alignment structure (16) which are flush with one another when the connecting elements (5, 6, 7, 19) are arranged in the intended manner in the final assembly arrangement, **characterized in that** each plate (19) has first and second alignment elements (24, 25, 26, 27; 32, 33, 34, 35) formed on the flat sides and adapted to one another, the first alignment elements being depressions (24, 25, 26, 27) formed on recesses (20, 21, 22, 23) and having a larger diameter at least in sections compared with the recesses (20, 21, 22, 23) and the second alignment elements being rings (32, 33, 34, 35) which correspond in their dimensions to the corresponding dimensions of the depressions (24, 25, 26, 27).

2. Device according to Claim 1, **characterized in that** the thread section (15) is a complete thread turn.

3. Device according to Claim 2, **characterized in that** the plates in the final assembly arrangement are arranged one on top of the other and **in that** the thread sections (15) of the plates (5, 6, 7) form a continuous internal thread.

4. Device according to any of Claims 1 to 3, **characterized in that** the connecting structure connects the connecting elements (5, 6, 7, 19) nondetachably to one another in a final assembly arrangement.

5. Device according to Claim 4, **characterized in that** the connecting structure has weld seams.

6. Device according to Claim 5, **characterized in that** the connecting structure has adhesive bonding points.

7. Device according to any of Claims 1 to 3, **characterized in that** the connecting structure has a cage part (8) with which the connecting elements (5, 6, 7, 19) are detachably connected to one another in a final assembly arrangement.

8. Device according to Claim 7, **characterized in that** the connecting elements (5, 6, 7, 19) have edge recesses (12, 13) made in the edge and **in that** the cage part (8) has a base plate (9) and side walls (10, 11) which are attached to the base plate (9) and are arranged in the edge recesses (12, 13) and whose ends pointing away from the base plate (9) embrace the connecting element (5) furthest away from the base plate (9).

## Revendications

1. Dispositif de liaison au moyen d'une vis, qui comprend un certain nombre d'éléments de liaison (5, 6, 7, 19) comportant respectivement une ouverture (14), qui sont destinés à être amenés en prise d'engagement avec le filetage d'une vis, dans lequel les éléments de liaison (5, 6, 7, 19) se présentent, dans une disposition de montage préalable, sous la forme d'éléments séparés, les éléments de liaison (5, 6, 7, 19) comportant en l'occurrence, le long du bord de leur ouverture (14), une portion filetée (15) d'une structure formant filetage, ce qui fait qu'il existe un agencement d'assemblage (8) dans lequel les éléments de liaison (5, 6, 7) sont, selon un agencement de montage final, respectivement maintenus les uns par rapport aux autres dans une disposition spatiale prédéterminée et dans lequel les éléments de liaison se présentent sous la forme de plaques plates (5, 6, 7, 19) et comprennent également une structure d'alignement qui, lorsque les éléments de liaison (5, 6, 7, 19) sont disposés selon l'agencement correspondant à leur destination, sont alignés les uns par rapport aux autres dans leur position de montage finale, **caractérisé en ce que** chaque plaque (19) est munie, sur ses faces plates, de premiers et de deuxièmes éléments d'alignement (24, 25, 26, 27 ; 32, 33, 34, 35) respectivement adaptés les uns aux autres, les premiers éléments d'alignement consistant en l'occurrence en des dépressions (24, 25, 26, 27) ménagées au niveau d'évidements (20, 21, 22, 23), dont le diamètre est, au moins au niveau d'une portion, plus grand comparativement aux évidements (20, 21, 22, 23), et les deuxièmes éléments d'alignement (32, 33, 34, 35) étant en l'occurrence constitués par des bagues, dont les dimensions correspondent aux dimensions correspondantes des dépressions (24, 25, 26, 27).

2. Dispositif selon la revendication 1, **caractérisé en ce que** la portion filetée (15) est un pas de vis s'étendant sur toute la circonférence.

3. Dispositif selon la revendication 2, **caractérisé en ce que** les plaques, dans l'agencement de montage final, sont respectivement empilées les uns sur les autres et **en ce que** les portions filetées respectives (15) des plaques (5, 6, 7) définissent un filetage intérieur ne présentant pas de solution de continuité.

4. Dispositif selon l'une des revendications 1 à 3 **caractérisé en ce que** la structure de liaison raccorde ensemble de manière indissociable les éléments de liaison (5, 6, 7, 19) en un agencement de montage final.

5. Dispositif selon la revendication 4, **caractérisé en ce que** la structure de liaison comporte des cordons de soudure.

6. Dispositif selon la revendication 5, **caractérisé en ce que** la structure de liaison comporte des points de collage.

7. Dispositif selon l'une des revendications 1 à 3, **caractérisé en ce que** la structure de liaison comporte un élément d'assemblage en cage (8) au moyen duquel les éléments de liaison (5, 6, 7, 19) sont raccordés ensemble dans un agencement de montage final avec une possibilité de dissociation ultérieure.

8. Dispositif selon la revendication 7, **caractérisé en ce que** les éléments de liaison (5, 6, 7, 19) comportent, au niveau de leurs bords, des échancrures (12, 13) et **en ce que** l'élément d'assemblage en cage (8) est constitué par une plaque de base (9) ainsi que par des parois latérales (10, 11) disposées attenantes à la plaque de base (9), qui viennent s'insérer dans les échancrures de rive (12, 13) et dont les extrémités orientées à l'opposé de la plaque de base (9) viennent cramponner pardessus l'élément de liaison (5) se trouvant dans la position la plus éloignée de la plaque de base (9).
